# EUROPÄISCHE PATENTANMELDUNG

(11) **EP 2 385 283 A1**
(43) Veröffentlichungstag der Anmeldung: **09.11.2011**
(21) Anmeldenummer: 11003721.5
(22) Anmeldetag: 06.05.2011
(51) Int. Cl.: F16K 31/06, F16K 39/02

(54) **Pneumatikventil**

(30) Priorität: 07.05.2010 DE 102010019687
(71) Anmelder: Hoerbiger Automotive Komfortsysteme GmbH, 86956 Schongau (DE)
(72) Erfinder: Macke, Wlodzimierz, 82140 Olching (DE); Seichter, Gerhard, 86977 Burggen (DE); Jones, Sigismund, 61267 Neu-Anspach (DE); Flossmann, Sandra, 86971 Peiting (DE)
(74) Vertreter: Grättinger Möhring von Poschinger Patentanwälte Partnerschaft

(57) **Zusammenfassung**

Ein Pneumatikventil (1) umfasst ein Ventilgehäuse (2) weist einen Eingang (11) und eine Eingangskammer (9), einen Ausgang (12) und eine Ausgangskammer (10) sowie eine Schließeinrichtung (20) mit einem ersten und einem zweiten Schließelement (21; 22) auf. Das erste Schließelement (21) ist dem Gehäuse zugeordnet, und das zweite Schließelement (22) wird durch einen an einem linear verschiebbaren Stößel (3) angeordneten, starr mit diesem verbundenen Schließkörper (25) gebildet, wobei auf den Stößel eine veränderliche Verschiebekräfte bereitstellende Linear-Betätigungseinrichtung (4) und eine nicht beeinflussbare, permanent wirksame Vorspann-und/oder Rückstelleinrichtung (26) wirkt. Sowohl in der Schließstellung des Ventils als auch in dessen Offenstellung ist der Stößel ohne Verschiebekräfte der Linear-Betätigungseinrichtung (4) aber unter Berücksichtigung von Rückstellkräften der Vorspann- und/oder Rückstelleinrichtung (26) kräftemäßig zumindest weitgehend ausbalanciert.

## Beschreibung

Die vorliegende Erfindung betrifft ein Pneumatikventil.

Pneumatikventile, wie sie zur Steuerung bzw. Regelung der zwischen zwei Bezugspunkten, insbesondere einem Ventileingang und einem Ventilausgang, in Relation zueinander bestehenden Druck- bzw. Strömungsverhältnisse von Luft oder einem anderen Pneumatikfluid eingesetzt werden, sind in verschiedenen Ausführungen bekannt. Sie umfassen typischerweise eine zwei zusammenwirkende Schließelemente umfassende Schließeinrichtung, wobei zumindest eines der beiden Schließelemente bewegbar und die Stellung des bewegbaren Schließelements mittels einer Betätigungseinrichtung veränderbar ist.

Die vorliegende Erfindung hat sich zur Aufgabe gemacht, ein Pneumatikventil bereitzustellen, dass sich in dem Sinne durch eine besonders hohe Effizienz und Leitungsfähigkeit auszeichnet, als große Fluidleistungen mit minimalen Eingangsleistungen hochdynamisch geschaltet werden.

Gelöst wird diese Aufgabenstellung gemäß der vorliegenden Erfindung durch die Implementierung der nachstehend angegebenen Kombination von miteinander funktional in synergetischer Weise zusammenwirkenden Merkmalen in einem Pneumatikventil:
- das Pneumatikventil umfasst ein Ventilgehäuse, welches einen Eingang und einen Ausgang aufweist;
- mit dem Eingang ist eine Eingangskammer und mit dem Ausgang ist eine Ausgangskammer verbunden;
- auf dem Strömungsweg zwischen der Eingangskammer und der Ausgangskammer ist eine zwei zusammenwirkende Schließelemente, nämlich ein erstes und ein zweites Schließelement, umfassende Schließeinrichtung vorgesehen;
- das erste Schließelement ist dem Gehäuse zugeordnet;
- das zweite Schließelement wird durch einen an einem linear verschiebbaren Stößel angeordneten, starr mit diesem verbundenen Schließkörper gebildet;
- auf den Stößel wirkt eine veränderliche Verschiebekräfte bereitstellende Linear-Betätigungseinrichtung und eine nicht beeinflussbare, permanent wirksame Vorspann-und/oder Rückstelleinrichtung;
- das Ventil hat zwei Betriebsstellungen, nämlich eine Schließstellung, in der die beiden Schließelemente der Schließeinrichtung dichtend aneinander anliegen, und eine Offenstellung, in der die beiden Schließelemente einen Abstand zueinander aufweisen und eine Durchtrittsöffnung definieren;
- in beiden Betriebsstellungen des Pneumatikventils ist der Stößel ohne Verschiebekräfte der Linear-Betätigungseinrichtung aber unter Berücksichtigung von Rückstellkräften der Vorspann- und/oder Rückstelleinrichtung kräftemäßig zumindest weitgehend ausbalanciert.

Demgemäß ist für das erfindungsgemäße Pneumatikventil unter anderem charakteristisch, dass von den beiden Schließelementen der auf dem Strömungsweg zwischen dem Eingang und dem Ausgang angeordneten Schließeinrichtung eines durch einen starr mit einem bewegbaren Stößel verbundenen Schließkörper gebildet ist, wobei zwei verschiedene Einrichtungen die Stellung des Stößels in dem Ventilgehäuse beeinflussen, nämlich einerseits eine ansteuerbare Linear-Betätigungseinrichtung, welche in Abhängigkeit von der jeweiligen Ansteuerung veränderliche Verschiebekräfte bereitstellt, und andererseits eine Vorspann- und/oder Rückstelleinrichtung, welche nicht beeinflussbar, permanent auf den Stößel wirkt. Dabei ist unter anderem durch die geometrische Gestaltung der Komponenten des Pneumatikventils und deren Abstimmung auf die Vorspann- und/oder Rückstelleinrichtung und die von dieser bereitgestellten, auf den Stößel wirkenden Verschiebekräfte weiterhin erreicht, dass in beiden Betriebsstellungen des Pneumatikventils, d.h. sowohl in der Schließstellung, in der die beiden Schließelemente der Schließeinrichtung dichtend aneinander anliegen, als auch in der Offenstellung, in der die beiden Schließelemente einen Abstand zueinander aufweisen und eine Durchtrittsöffnung definieren, der Stößel unter Berücksichtigung der aus den eingangs- und ausgangsseitigen Druckverhältnisse resultierenden pneumostatischen Differentialkräfte sowie der Rückstellkräfte der Vorspann-und/oder Rückstelleinrichtung kräftemäßig zumindest weitgehend, besonders bevorzugt vollständig ausbalanciert ist. Als Ergebnis hiervon braucht der Stößel weder in der Schließstellung, noch in der Offenstellung der Schließeinrichtung mittels der ansteuerbare Linear-Betätigungseinrichtung im nennenswerten Umfang beaufschlagt zu werden. Dies wirkt sich wiederum im Sinne der oben genannten Aufgabenstellung in doppelter Hinsicht vorteilhaft aus. Zum einen ist dies für die Effizienz des Pneumatikventils von Vorteil, weil dessen gewissermaßen pneumostatisch bistabile Ausführung bei typischen Anwendungsprofilen zu einer besonders geringen Leistungsaufnahme der ansteuerbaren Linear-Betätigungseinrichtung führt. Und weiterhin lässt sich - wiederum infolge der gewissermaßen pneumostatisch bistabilen Ausführung des Pneumatikventils - mit minimalen Eingangsleistungen der ansteuerbaren Linear-Betätigungseinrichtung der Stößel hochdynamisch zwischen der Offenstellung und der Schließstellung der Schließeinrichtung bewegen, so dass sich das Pneumatikventil selbst durch eine besonders hohe Schaltdynamik auszeichnet. Dass die ansteuerbaren Linear-Betätigungseinrichtung als weitere Konsequenz aus den vorstehend aufgezeigten Zusammenhängen auch besonders kompakt ausgeführt sein kann, kommt als weiterer Vorteil der Erfindung ebenso hinzu wie die erzielbare hohe Zuverlässigkeit. Im Sinne der hohen Zuverlässigkeit kommt nicht nur zum Tragen, dass das erfindungsgemäße Pneumatikventil, wie dargelegt, mit geringen Leistungsaufnahmen der ansteuerbaren Linear-Betätigungseinrichtung betrieben werden kann; es kommt vielmehr ergänzend hinzu, dass der Stößel durch die ständig auf ihn wirkenden Rückstellkräfte der Vorspann- und/oder Rückstelleinrichtung bei einer Abweichung der zwischen der eingangs- und der Ausgangsseite bestehenden Druck- und/oder Strömungsverhältnisse von dem Auslegungspunkt eine definierte Sicherheitsstellung einnehmen kann.

Eine erste bevorzugte Weiterbildung der Erfindung zeichnet sich dadurch aus, dass in der Schließstellung der Schließeinrichtung die Eingangskammer oder die Ausgangskammer, d.h. der jeweils genannte Kammer für sich, in dem Sinne pneumostatisch zumindest im Wesentlichen ausbalanciert ist, als keine oder nur unwesentliche aus dem Druck in der Eingangs- bzw. der Ausgangskammer resultierende Verschiebekräfte auf den Stößel ausgeübt werden. Die jeweils andere Kammer ist dann geometrisch dergestalt ausgelegt, dass in ihr eine auf den Stößel wirkende pneumostatische Kraft generiert wird, die der ständig auf den Stößel wirkenden Rückstellkraft der Vorspann- und/oder Rückstelleinrichtung entgegengerichtet ist und diese zumindest im Wesentlichen kompensiert.

Bei bestimmten Anwendungen kann es indessen auch günstig sein, wenn in der Schließstellung der Schließeinrichtung weder die Eingangskammer, noch die Ausgangskammer für sich genommen pneumostatisch ausbalanciert ist, sondern vielmehr in der Schließstellung die Eingangskammer und die Ausgangskammer in Verbindung mit der Vorspann- und/oder Rückstelleinrichtung in dem Sinne gemeinsam pneumostatisch zumindest im Wesentlichen ausbalanciert sind, als ein aus dem Druck in der Eingangskammer resultierender erster Verschiebekraftanteil und ein aus dem Druck in der Ausgangskammer resultierender zweiter Verschiebekraftanteil durch Überlagerung eine resultierende Verschiebekraft bilden, die der auf den Stößel wirkenden Rückstellkraft der Vorspann-und/oder Rückstelleinrichtung entgegengerichtet ist und dem Betrage nach im Wesentlichen entspricht. Bei dieser Weiterbildung der Erfindung erfolgt eine summarische Kompensation von drei Kraftanteilen, nämlich der durch Überlagerung der beiden in der Eingangskammer und der Ausgangskammer generierten Kraftanteile gebildeten resultierenden pneumatischen Verschiebekraft mit der Rückstellkraft der Vorspann- und/oder Rückstelleinrichtung.

Gemäß einer anderen bevorzugten Weiterbildung des erfindungsgemäßen Pneumatikventils sind in Offenstellung der Schließeinrichtung die Eingangskammer und die Ausgangskammer in Verbindung mit der Vorspann- und/oder Rückstelleinrichtung in dem Sinne gemeinsam pneumostatisch zumindest im Wesentlichen ausbalanciert, als eine Verschiebekraft, die aus den in dem die Eingangskammer und die Ausgangskammer umfassenden Innenraum des Pneumatikventils bestehenden Druckverhältnissen resultiert, der auf den Stößel wirkenden Rückstellkraft der Vorspann- und/oder Rückstelleinrichtung entgegengerichtet ist und dem Betrage nach im Wesentlichen entspricht.

Bevorzugt weist das erfindungsgemäße Pneumatikventil keinerlei Druckausgleichsbohrungen oder -kanäle auf. In diesem Falle werden die weiter oben eingehend dargelegten Effekte insbesondere allein durch eine geeignete Auslegung und Dimensionierung der geometrischen Verhältnisse der Eingangs- und der Ausgangskammer und deren Abstimmung auf die Vorspann- und/oder Rückstelleinrichtung erreicht, d.h. ohne über Druckausgleichsbohrungen oder -kanäle beaufschlagte zusätzliche Kompensationsräume. Dies ist ein für die Zuverlässigkeit des Pneumatikventils bedeutsamer Aspekt, nachdem sich Druckausgleichsbohrungen oder -kanäle aufgrund des typischerweise geringen Querschnitts in der Vergangenheit im Hinblick auf eine mögliche Verschmutzung durch Fremdkörper oder Rückstände als störanfällig erwiesen haben.

Eine wiederum andere bevorzugte Weiterbildung der vorliegenden Erfindung zeichnet sich dadurch aus, dass der - die Eingangskammer und die Ausgangskammer umfassende - Innenraum des Pneumatik-Schaltventils zumindest einseitig gegenüber der Umgebung durch ein Dichtelement abgedichtet ist. Besonders bevorzugt ist der besagte Innenraum des Pneumatikventils beidseitig durch Dichtelemente gegenüber der Umgebung abgedichtet, so dass er lediglich zwei Öffnungen aufweist, nämlich den Eingang und den Ausgang. Namentlich kann dabei, in besonders bevorzugter Weiterbildung, das mindestens eine Dichtelement durch eine einerseits mit dem Ventilgehäuse und andererseits mit dem Stößel verbundene Membran gebildet sein, die insbesondere ihrer jeweils äußeren Seite mit Atmosphärendruck beaufschlagt ist. Die mindestens eine Membran ist dabei Teil des das pneumostatische Ausbalancieren des Pneumatikventils bewirkenden Gesamtsystems, indem sie eine aus der zwischen den beiden Seiten der Membran herrschenden Druckdifferenz resultierende Kraft, die zu dem oben eingehend erläuterten Kraftausgleich bzw. Kräftegleichgewicht beiträgt, auf den Stößel überträgt.

Eine solche Ausführung des erfindungsgemäßen Pneumatikventils mit mindestens einer Membran ist indessen nicht zwingend. Vielmehr kann, was im Einzelfall durchaus vorteilhaft sein kann, das mindestens eine Dichtelement beispielsweise auch durch eine Gleitdichtung bzw. Gleitringdichtung gebildet sein, die besonders bevorzugt gehäusefest angeordnet und auf dem Stößel gleitend ausgeführt sein kann. Auch kommt eine kombinierte Abdichtung des Innenraumes einerseits mittels einer Membran und andererseits mittels einer Gleitringdichtung in Betracht.

Im Rahmen der vorliegenden Erfindung kann die Vorspann und/oder Rückstelleinrichtung konstruktiv durchaus in unterschiedlicher Weise ausgeführt sein. Insbesondere kommt, freilich ohne dass die Erfindung hierauf beschränkt ist, in Betracht, dass die Vorspann und/oder Rückstelleinrichtung eine den Stößel ständig beaufschlagende Vorspann- oder Rückstellfeder umfasst. Diese kann, je nach der Ausführung und bestimmungsgemäßen Anwendung des Pneumatikventils, den Stößel in Richtung auf die Schließstellung des Ventils oder aber in Richtung auf die Offenstellung des Ventils vorspannen.

Für die Anordnung der besagten Vorspann- oder Rückstellfeder kommen im Rahmen der vorliegenden Erfindung wiederum durchaus verschiedene Möglichkeiten in Betracht, deren Zweckmäßigkeit von der individuellen Anwendung des Pneumatikventils abhängt. So kann die Vorspann- oder Rückstellfeder insbesondere in der Ausgangskammer angeordnet sein. Günstig ist unter Umständen aber auch eine Anordnung in der Eingangskammer oder aber außerhalb des Innenraumes des Pneumatikventils.

Wenngleich dies nicht zwingend ist, so ist für viele typische Anwendungsfälle der vorliegenden Erfindung doch von Vorteil, wenn das erste Schließelement gehäusefest angeordnet ist. Dabei kann es, in abermals vorteilhafter Weiterbildung, durch eine gehäusefeste ringförmige Dichtkante gebildet sein. Besonders günstig ist in diesem Falle, wenn der Durchmesser der ringförmigen Dichtkante geringer als die Durchmesser der beidseits an die Dichtkante angrenzende Bereiche des Stößels; denn hierdurch ergeben sich trotz der auf einfach Weise möglichen Kraftkompensation im Sinne des weiter oben erläuterten pneumostatischen Gleichgewichts in beiden Betriebsstellungen des Pneumatikventils besonders kompakte Verhältnisse.

Gemäß einer abermals anderen Weiterbildung der Erfindung umfasst die ansteuerbare Betätigungseinrichtung einen Elektromagnet, wobei in diesem Falle der Stößel einen Anker umfasst bzw. als Anker ausgeführt ist. Für die Anordnung des Elektromagnets gibt es in Abhängigkeit von den individuellen Gegebenheiten mehrere vorteilhafte Möglichkeiten. So kann der Elektromagnet insbesondere zwischen der Eingangskammer und der Ausgangskammer angeordnet sein. Gemäß einer bevorzugten Alternative ist der Elektromagnet außerhalb des Innenraumes, insbesondere benachbart zur Ausgangkammer angeordnet.

Der Vollständigkeit halber ist darauf hinzuweisen, dass sich die vorliegende Erfindung insbesondere auf einfache Schaltventile bezieht, die ein typisches Anwendungsbeispiel darstellen. Beschränkt ist die Erfindung hierauf indessen nicht; vielmehr kann das erfindungsgemäße Pneumatikventil auch Bestandteil einer komplexeren Ventilstruktur bzw. Ventileinheit sein.

Im Folgenden wird die vorliegende Erfindung anhand dreier in der Zeichnung veranschaulichter bevorzugter Ausführungsbeispiele näher erläutert. Dabei zeigt
- Fig. 1: einen Axialschnitt durch ein erfindungsgemäßes Pneumatikventil in einer ersten Ausführungsform, wobei zwei unterschiedliche Betriebsstellungen dargestellt sind,
- Fig. 2: einen Axialschnitt durch ein erfindungsgemäßes Pneumatikventil in einer zweiten Ausführungsform, wobei wiederum zwei unterschiedliche Betriebsstellungen dargestellt sind, und
- Fig. 3: einen Axialschnitt durch ein erfindungsgemäßes Pneumatikventil in einer dritten Ausführungsform.

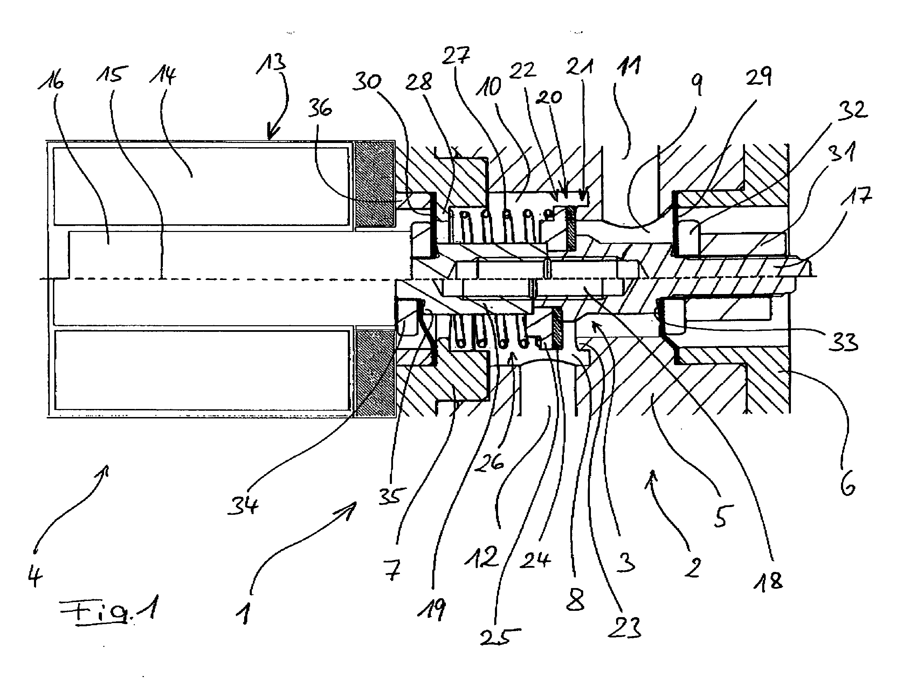

Das in Fig. 1 gezeigte Pneumatikventil 1, welches oben in Fig. 1 in seiner Schließstellung und unten in Fig. 1 in seiner Offenstellung dargestellt ist, umfasst drei Hauptkomponenten, nämlich ein Ventilgehäuse 2, einen darin aufgenommenen Stößel 3 und eine auf diesen wirkende ansteuerbare, je nach Ansteuerung veränderliche Verschiebekräfte bereitstellende Linear-Betätigungseinrichtung 4. Das Ventilgehäuse 2 ist aus mehreren Bauteilen, nämlich einem Grundkörper 5, einem ersten Abschlussteil 6 und einem zweiten Abschlussteil 7 zusammengesetzt. Es umschließt einen Innenraum 8, welcher eine Eingangskammer 9 und eine Ausgangskammer 10 umfasst. In die Eingangskammer 9 mündet der Eingang 11 des Pneumatikventils und in die Ausgangskammer der Ausgang 12.

Die ansteuerbare Betätigungseinrichtung 4 umfasst einen endseitig an das Ventilgehäuse 2, nämlich an das zweite Abschlussteil 7 angebauten Elektromagnet 13. Dieser weist einen Spulenkörper 14 und einen darin längs der Achse 15 verschiebbar aufgenommenen Anker 16 auf. Der Anker 16 ist starr mit dem Stößel 3 verbunden.

Der Stößel 3 ist seinerseits aus Gründen der Montage aus zwei Abschnitten zusammengesetzt, nämlich aus einem ersten Abschnitt 17 und einem mit diesem mittels eines Verbindungsbolzens 18 verspannten zweiten Abschnitt 19.

Auf dem Strömungsweg zwischen der Eingangskammer 9 und der Ausgangskammer 10 befindet sich eine Schließeinrichtung 20. Diese umfasst zwei zusammenwirkende Schließelemente, nämlich ein erstes Schließelement 21 und ein zweites Schließelement 22. Das erste Schließelement ist dem Ventilgehäuse 2 zugeordnet; es ist ausgeführt als ein einen Ventilsitz ausbildender ringförmiger Vorsprung 23 am Grundkörper 5 des Ventilgehäuses 2. Das zweite Schließelement 22 wird durch einen an dem Stößel 3 angeordneten, starr mit diesem verbundenen, stirnseitig mit einer Dichtauflage 24 ausgestatteten Schließkörper 25 gebildet.

Auf den Stößel 3 wirkt permanent eine Vorspann- und Rückstelleinrichtung 26, welche über eine Vorspann- und Rückstellfeder 27 eine nicht beeinflussbare Vorspann- und Rückstellkraft bereitstellt. Die als Schraubenfeder ausgeführte, in der Ausgangskammer 10 angeordnete Vorspann-und Rückstellfeder 27 stützt sich dabei einerseits an einem Bund 28 des zweiten Abschlussteils 7 des Ventilgehäuses 2 und andererseits an dem Schließkörper 25 ab. Sie spannt den Stößel in Richtung auf die Schließstellung des Ventils vor.

Das Pneumatikventil 1 umfasst weiterhin zwei den Innenraum 8 begrenzende und beidseitig gegenüber der Umgebung abdichtende - und somit Dichtelemente bildende - Membranen, nämlich eine erste Membran 29 und eine zweite Membran 30. Sowohl die erste Membran 29 als auch die zweite Membran 30 sind radial innen an dem Stößel festgelegt, d.h. mit diesem fest verbunden. Hierzu ist der innere Rand der ersten Membran 29 mittels einer Mutter 31 und einer Andruckscheibe 32 gegen einen Absatz 33 des ersten Abschnitts 17 des Stößels 3 verspannt; und der innere Rand der zweiten Membran 30 ist mittels einer Mutter 34 gegen einen Absatz 35 des zweiten Abschnitts 19 des Stößels 3 verspannt. Radial außen sind beide Membranen 29 und 30 indessen an dem Ventilgehäuse 2 festgelegt. Hierzu ist der äußere Rand der ersten Membran 29 zwischen dem Grundkörper 5 des Ventilgehäuses 2 und dem ersten Abschlussteil 6 eingespannt, der äußere Rand der zweiten Membran 30 indessen zwischen dem Bund 28 des zweiten Abschlussteils 7 des Ventilgehäuses 2 und einer in dieses eingesetzten Druckhülse 36.

In seinen beiden Betriebsstellungen des Pneumatikventils 1, d.h. sowohl in seiner in Fig. 1 oben gezeigten Schließstellung als auch in seiner in Fig. 1 unten gezeigten Offenstellung, ist der Stößel 3 ohne Verschiebekräfte der Linear-Betätigungseinrichtung 4 in dem Sinne weitgehend ausbalanciert, als sich die auf ihn wirkenden Verschiebekraftkomponenten gegenseitig weitgehend aufheben bzw. kompensieren. In der Schließstellung bestehen insoweit drei Verschiebekraftkomponenten, nämlich die Vorspann- und Rückstellkraft der Vorspann- und Rückstelleinrichtung 26, die aus den geometrischen Verhältnissen der Eingangskammer 9 und den in dieser herrschen Druckverhältnissen resultierende, über die erste Membran 29 und den Schließkörper 25 auf den Stößel 3 übertragene erste pneumatische Verschiebekraft sowie die aus den geometrischen Verhältnissen der Ausgangskammer 10 und den in dieser herrschen Druckverhältnissen resultierende, über die zweite Membran 30 und den Schließkörper 25 auf den Stößel 3 übertragene zweite pneumatische Verschiebekraft. In der Offenstellung des Pneumatikventils bestehen demgegenüber zwei sich insoweit im Wesentlichen kompensierende bzw. aufhebende Verschiebekraftkomponenten, nämlich die Vorspann-und Rückstellkraft der Vorspann- und Rückstelleinrichtung 26, welche sich angesichts der größeren Vorspannung der Vorspann-und Rückstellfeder 27 in der Offenstellung des Schließkörpers 25 dem Betrage nach von der Vorspann- und Rückstellkraft der Vorspann- und Rückstelleinrichtung 26 in der Schließstellung des Ventils unterscheidet, und die aus den geometrischen Verhältnissen des Innenraumes 8 und den in diesem herrschen Druckverhältnissen - einschließlich des insoweit zu berücksichtigen Druckabfalls an der Durchtrittsöffnung der Schließeinheit 20 - resultierende, über die erste Membran 29 und die zweite Membran 30 auf den Stößel 3 übertragene pneumatische Verschiebekraft.

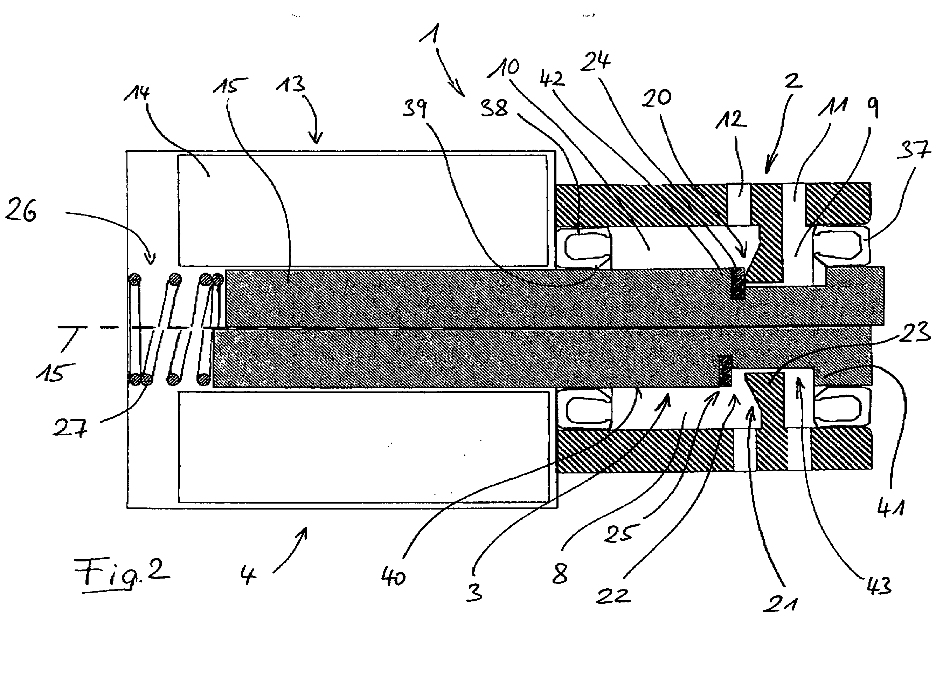

Nach dem in Fig. 2 (z.T. schematisch) gezeigten zweiten Ausführungsbeispiel erfolgt, was den bedeutendsten Unterschied zu dem Pneumatikventil nach Fig. 1 ausmacht, die Abdichtung des Innenraums 8 gegenüber der Umgebung nicht mittels zweier Membranen, sondern vielmehr über zwei Ringdichtungen, nämlich eine der Eingangskammer 9 zugeordnete erste Ringdichtung 37 und eine der Ausgangskammer 10 zugeordnete zweite Ringdichtung 38. Beide Ringdichtungen 37 und 38 sind gehäusefest angeordnet, d.h. in dem Ventilgehäuse 2 festgelegt. Sie gleiten jeweils mit einer Dichtlippe 39 dichtend auf dem Außenumfang 40 des Stößels 3.

Der Stößel weist eine umlaufende, durch zwei Schultern 41 und 42 begrenzte Einschnürung 43 auf, in deren Bereich der Durchmesser des Stößels 3 geringer ist als in den beiden angrenzenden Bereichen. Das erste Schließelement 21 der Schließeinrichtung 20 ist wiederum als ein einen Ventilsitz ausbildender ringförmiger Vorsprung 23 am Ventilgehäuse 2 ausgeführt, allerdings mit der Besonderheit, dass der ringförmige Vorsprung dergestalt in die Einschnürung 43 hineinragt, dass der Durchmesser der ringförmigen Dichtkante geringer als die Durchmesser der beidseits an die Dichtkante angrenzende Bereiche des Stößels. Das zweite Schließelement 22 wird indessen durch die Schulter 42 des Stößels 3 und die auf dieser aufliegende ringscheibenförmig Dichtauflage 24 gebildet.

Die permanent auf den Stößel 3 wirkende, diesen mit einer in die Schließstellung gerichteten Vorspann- und Rückstellkraft beaufschlagende eine Vorspann- und Rückstelleinrichtung 26 umfasst wiederum eine als Schraubenfeder ausgeführte Vorspann- und Rückstellfeder 27, die allerdings außerhalb des Innenraumes 8 angeordnet ist, nämlich an dem der ansteuerbaren Linear-Betätigungseinrichtung 4 zugeordneten Ende des Stößels 3 innerhalb des Gehäuses des Elektromagnets 13. Der Stößel selbst stallt bei dieser Ausführungsform den Anker 16 der wiederum einen Elektromagnet 13 umfassenden ansteuerbaren Linear-Betätigungseinrichtung 4 dar.

Die weiter oben erläuterte pneumostatische Ausbalancierung des Stößels sowohl in der Schließstellung als auch in der Offenstellung des Ventils wird bei diesem Ausführungsbeispiel durch die spezifische Abstimmung der verschiedenen Durchmesser des Stößels in dessen unterschiedlichen Bereichen auf die Dimensionierung und Anordnung der Dichtkante des den Ventilsitz ausbildenden ringförmigen Vorsprungs 23 und die Vorspann- und Rückstellkraft der Vorspann- und Rückstelleinrichtung 26 erreicht.

Im Weiteren erklärt sich das Ausführungsbeispiel nach Fig. 2 aus den vorstehenden Erläuterungen des Ausführungsbeispiels nach Fig. 1, so dass zur Vermeidung von Wiederholungen auf diese verwiesen wird.

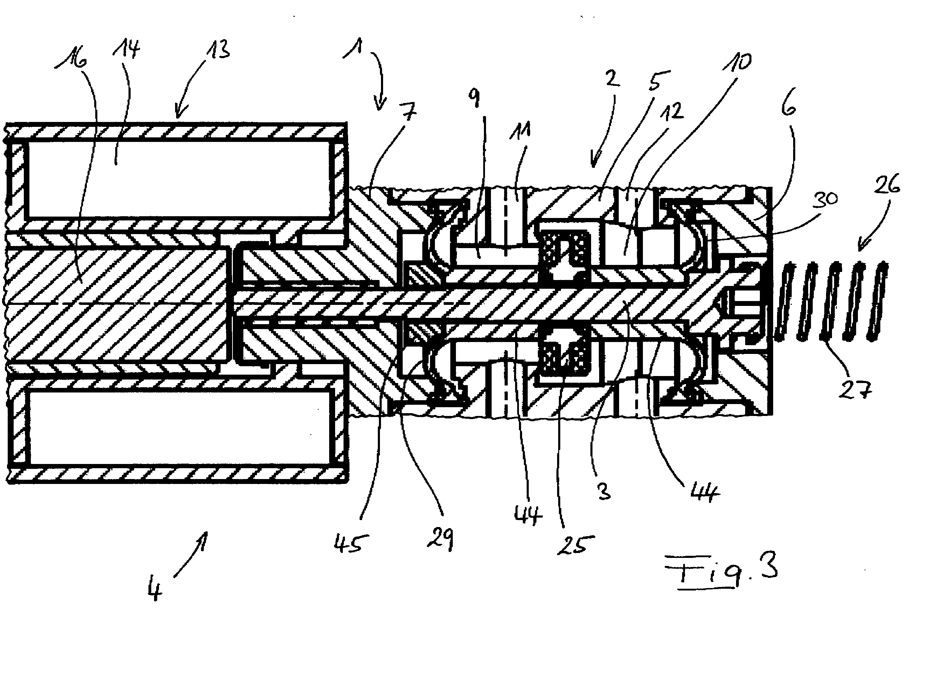

Das in Fig. 3 gezeigte dritte Ausführungsbeispiel eines erfindungsgemäßen Pneumatikventils 1 stimmt - bei einigen baulichen Abweichungen - funktional weitestgehend mit dem Ausführungsbeispiel nach Fig. 1 überein. Insoweit wird wiederum auf die Erläuterungen der Fig. 1 verwiesen. Zu den baulichen Abweichungen zählt die konstruktiv anders gelöste Gestaltung des Stößels durch dessen einteilige Ausführung mit darauf aufgeschobenen Hülsen 44, an die jeweils die erste Membran 29 bzw. die zweite Membran 30 angeformt und die gemeinsam mit dem zwischen den beiden Hülsen angeordneten Schließkörper 25 mittels der Mutter 45 auf dem Stößel verspannt sind. Hinzuweisen ist im Übrigen auf die Anordnung der Vorspann- und Rückstelleinrichtung 26 wiederum außerhalb des Innenraumes 8, nämlich in diesem Falle auf der der ansteuerbaren Linear-Betätigungseinrichtung 4 gegenüberliegenden Seite des Pneumatikventils.

## Patentansprüche

1. Pneumatikventil (1) mit den folgenden Merkmalen:
- ein Ventilgehäuse (2) weist einen Eingang (11) und einen Ausgang (12) auf;
- mit dem Eingang ist eine Eingangskammer (9) und mit dem Ausgang ist eine Ausgangskammer (10) verbunden;
- auf dem Strömungsweg zwischen der Eingangskammer und der Ausgangskammer ist eine zwei zusammenwirkende Schließelemente, nämlich ein erstes Schließelement (21) und ein zweites Schließelement (22), umfassende Schließeinrichtung (20) vorgesehen;
- das erste Schließelement (21) ist dem Gehäuse zugeordnet;
- das zweite Schließelement (22) wird durch einen an einem linear verschiebbaren Stößel (3) angeordneten, starr mit diesem verbundenen Schließkörper (25) gebildet;
- auf den Stößel wirkt eine veränderliche Verschiebekräfte bereitstellende Linear-Betätigungseinrichtung (4) und eine nicht beeinflussbare, permanent wirksame Vorspann-und/oder Rückstelleinrichtung (26);
- das Ventil hat zwei Betriebsstellungen, nämlich eine Schließstellung, in der die beiden Schließelemente (21, 22) der Schließeinrichtung (20) dichtend aneinander anliegen, und eine Offenstellung, in der die beiden Schließelemente einen Abstand zueinander aufweisen und eine Durchtrittsöffnung definieren;
- in beiden Betriebsstellungen des Pneumatikventils ist der Stößel ohne Verschiebekräfte der Linear-Betätigungseinrichtung (4) aber unter Berücksichtigung von Rückstellkräften der Vorspann- und/oder Rückstelleinrichtung (26) kräftemäßig zumindest weitgehend ausbalanciert.

2. Pneumatikventil nach Anspruch 1, **dadurch gekennzeichnet, dass** in der Schließstellung die Eingangskammer (9) für sich genommen in dem Sinne pneumostatisch zumindest im Wesentlichen ausbalanciert ist, als keine oder nur unwesentliche aus dem Druck in der Eingangskammer resultierende Verschiebekräfte auf den Stößel (3) ausgeübt werden.

3. Pneumatikventil nach Anspruch 1, **dadurch gekennzeichnet, dass** in der Schließstellung die Ausgangskammer (10) für sich genommen in dem Sinne pneumostatisch zumindest im Wesentlichen ausbalanciert ist, als keine oder nur unwesentliche aus dem Druck in der Ausgangskammer resultierende Verschiebekräfte auf den Stößel (3) ausgeübt werden.

4. Pneumatikventil nach Anspruch 1, **dadurch gekennzeichnet, dass** in der Schließstellung die Eingangskammer (9) und die Ausgangskammer (10) in Verbindung mit der Vorspann- und/oder Rückstelleinrichtung (26) in dem Sinne gemeinsam pneumostatisch zumindest im Wesentlichen ausbalanciert sind, als ein aus dem Druck in der Eingangskammer resultierender erster Verschiebekraftanteil und ein aus dem Druck in der Ausgangskammer resultierender zweiter Verschiebekraftanteil durch Überlagerung eine resultierende Verschiebekraft bilden, die der auf den Stößel (3) wirkenden Rückstellkraft der Vorspann- und/oder Rückstelleinrichtung entgegengerichtet ist und dem Betrage nach im Wesentlichen entspricht.

5. Pneumatikventil nach einem der Ansprüche 1 bis 4, **dadurch gekennzeichnet, dass** in Offenstellung die Eingangskammer (9) und die Ausgangskammer (10) in Verbindung mit der Vorspann- und/oder Rückstelleinrichtung (26) in dem Sinne gemeinsam pneumostatisch zumindest im Wesentlichen ausbalanciert sind, als eine Verschiebekraft, die aus den in dem die Eingangskammer und die Ausgangskammer umfassenden Innenraum (8) des Pneumatikventils bestehenden Druckverhältnissen resultiert, der auf den Stößel wirkenden Rückstellkraft der Vorspann- und/oder Rückstelleinrichtung (26) entgegengerichtet ist und dem Betrage nach im Wesentlichen entspricht.

6. Pneumatikventil nach einem der Ansprüche 1 bis 5, **dadurch gekennzeichnet, dass** keinerlei Druckausgleichsbohrungen oder -kanäle vorgesehen sind.

7. Pneumatikventil nach einem der Ansprüche 1 bis 6, **dadurch gekennzeichnet, dass** der die Eingangskammer (9) und die Ausgangskammer (10) umfassende Innenraum (8) des Pneumatikventils zumindest einseitig durch ein Dichtelement, bevorzugt beidseitig durch Dichtelemente gegenüber der Umgebung abgedichtet ist.

8. Pneumatikventil nach Anspruch 7, **dadurch gekennzeichnet, dass** das bzw. mindestens ein Dichtelement, bevorzugt jedes der beiden Dichtelemente durch eine einerseits mit dem Ventilgehäuse (2) und andererseits mit dem Stößel (3) verbundene Membran (29, 30) gebildet ist, wobei bevorzugt die bzw. jede Membranen auf ihrer jeweils äußeren Seite mit Atmosphärendruck beaufschlagt ist.

9. Pneumatikventil nach Anspruch 7, **dadurch gekennzeichnet, dass** das bzw. mindestens ein Dichtelement, bevorzugt jedes der beiden Dichtelemente durch eine Gleitdichtung (37, 38) gebildet ist, wobei bevorzugt die bzw. jede Gleitdichtung gehäusefest angeordnet und auf dem Stößel (3) gleitend ausgeführt ist.

10. Pneumatikventil nach einem der Ansprüche 1 bis 9, **dadurch gekennzeichnet, dass** die Vorspann und/oder Rückstelleinrichtung (26) eine den Stößel (3) ständig beaufschlagende Vorspann- oder Rückstellfeder (27), die den Stößel bevorzugt in Richtung auf die Schließstellung des Ventils vorspannt, umfasst.

11. Pneumatikventil nach Anspruch 10, **dadurch gekennzeichnet, dass** die Vorspann- oder Rückstellfeder (27) in der Ausgangskammer (10) oder der Eingangskammer (9) angeordnet ist.

12. Pneumatikventil nach Anspruch 10, **dadurch gekennzeichnet, dass** Vorspann- oder Rückstellfeder (27) außerhalb des Innenraumes (8) angeordnet ist.

13. Pneumatikventil nach einem der Ansprüche 1 bis 12, **dadurch gekennzeichnet, dass** das erste Schließelement (21) gehäusefest angeordnet, bevorzugt durch eine gehäusefeste ringförmige Dichtkante gebildet ist.

14. Pneumatikventil nach Anspruch 13, **dadurch gekennzeichnet, dass** der Durchmesser der ringförmigen Dichtkante gleich oder geringer ist als die Durchmesser der beidseits an die Dichtkante angrenzende Bereiche des Stößels (3).

15. Pneumatikventil nach einem der Ansprüche 1 bis 14, **dadurch gekennzeichnet, dass** die ansteuerbare Betätigungseinrichtung (4) einen Elektromagnet (13) und der Stößel (3) einen Anker (16) umfasst.

16. Pneumatikventil nach Anspruch 15, **dadurch gekennzeichnet, dass** der Elektromagnet (13) zwischen der Eingangskammer (9) und der Ausgangskammer (10) angeordnet ist.

17. Pneumatikventil nach Anspruch 15, **dadurch gekennzeichnet, dass** der Elektromagnet (13) außerhalb des Innenraumes (8), insbesondere benachbart zur Ausgangkammer (10) angeordnet ist.
